# EUROPEAN PATENT APPLICATION

(11) **EP 4 685 643 A1**
(43) Date of publication of application: **28.01.2026**
(21) Application number: 25188625.5
(22) Date of filing: 09.07.2025
(51) Int. Cl.: G06F 9/48, G06F 9/54

(54) **MOVING A STATEFUL APPLICATION BETWEEN NODES OF A DISTRIBUTED COMPUTING ENVIRONMENT**

(30) Priority: 24.07.2024 US 202418782836
(71) Applicant: Red Hat, Inc., Raleigh, NC 27601 (US)
(72) Inventor: MORTARI, Matteo, Raleigh, 27601 (US); ZONCA, Daniele, Raleigh, 27601 (US); FUSCO, Mario, Raleigh, 27601 (US)
(74) Representative: Murgitroyd & Company

(57) **Abstract**

In one example, a system can operate an event ingest valve to pause event streaming to an event processing application executing on a first node of a distributed computing environment. The system can then access state data, of the event processing application, stored in a local memory of the first node. The system can generate a snapshot of the state data of the event processing application. After generating the snapshot, the system can shut down the event processing application on the first node. The system can then provide the snapshot to a second node of the distributed computing environment, the second node being configured to start the event processing application using the state data. After the event processing application is started on the second node, the system can operate the event ingest valve to resume the event streaming to the event processing application executing on the second node.

## Description

### Technical Field

The present disclosure relates generally to stateful applications in distributed computing environments. More specifically, but not by way of limitation, this disclosure relates to moving a stateful application between nodes of a distributed computing environment.

### Background

Stateful applications have become prevalent in computing clusters, cloud environments, data grids, and other types of distributed computing environments. A stateful application can save state wdata to local memory or persistent storage for subsequent use by the application, clients, and/or other applications. The state data can include client session data about previous communications, login statuses, or other contextual information. In many cases, there can be multiple instances of the same stateful application running on multiple servers at a given time in a distributed computing environment. In such scenarios, client communications can be routed to the same stateful application instance on the same server each time. This allows the stateful application instance to take advantage of the state data in handling those communications.

### Summary

According to a first aspect of the present disclosure there is provided a computer-implemented method comprising: operating an event ingest valve to pause event streaming to an event processing application executing on a first node of a distributed computing environment, the event ingest valve being separate from the event processing application; accessing state data, of the event processing application, stored in a local memory of the first node; generating a snapshot of the state data of the event processing application; after generating the snapshot, shutting down the event processing application on the first node; providing the snapshot to a second node of the distributed computing environment, wherein the second node starts the event processing application using the state data; and after the event processing application is started on the second node, operating the event ingest valve to resume the event streaming to the event processing application executing on the second node.

The event ingest valve may be software that is external to the first node.

The snapshot may be generated after operating the event ingest valve to pause the event streaming to the event processing application.

The event processing application may be executing in a virtual machine, and generating the snapshot of the state data may involve copying the state data from a virtual memory of the virtual machine to persistent storage of the first node.

The method may further comprise: storing the snapshot to persistent storage logically connected to the first node; and prior to the event processing application being started on the second node, logically connecting the persistent storage with the snapshot to the second node.

The event processing application may be a stateful application that is configured to store the state data to the local memory and not persistent storage.

The state data may correspond to a state of the event processing application at a point in time at which the snapshot is generated.

The method may further comprise: prior to operating the event ingest valve to pause the event streaming to the event processing application executing on the first node, receiving a first command issued by a user via a graphical user interface; in response to receiving the first command, operating the event ingest valve to pause the event streaming to the event processing application; prior to operating the event ingest valve to resume the event streaming to the event processing application executing on the second node, receiving a second command issued by the user via the graphical user interface; and in response to receiving the second command, operating the event ingest valve to resume the event streaming to the event processing application.

According to a second aspect of the present disclosure there is provided a system comprising: one or more processors; and one or more memories including instructions that are executable by the one or more processors for causing the one or more processors to perform operations including: operating an event ingest valve to pause event streaming to an event processing application executing on a first node of a distributed computing environment, the event ingest valve being separate from the event processing application; accessing state data, of the event processing application, stored in a local memory of the first node; generating a snapshot of the state data of the event processing application; after generating the snapshot, shutting down the event processing application on the first node; providing the snapshot to a second node of the distributed computing environment, the second node being configured to start the event processing application using the state data; and after the event processing application is started on the second node, operating the event ingest valve to resume the event streaming to the event processing application executing on the second node.

The event ingest valve may be software that is external to the first node and the second node.

The snapshot may be generated after operating the event ingest valve to pause the event streaming to the event processing application.

The event processing application may be executing in a virtual machine, and generating the snapshot of the state data may involve copying the state data from a virtual memory of the virtual machine to persistent storage of the first node.

The operations may further comprise: storing the snapshot to persistent storage logically connected to the first node; and prior to the event processing application being started on the second node, logically connecting the persistent storage with the snapshot to the second node.

The event processing application may be a stateful application configured to store the state data to the local memory of the first node.

The state data may correspond to a state of the event processing application at a point in time at which the snapshot is generated.

The operations may further comprise: prior to operating the event ingest valve to pause the event streaming to the event processing application executing on the first node, receiving a first command from a user via a command line interface; in response to receiving the first command, operating the event ingest valve to pause the event streaming to the event processing application; prior to operating the event ingest valve to resume the event streaming to the event processing application executing on the second node, receiving a second command from the user via the command line interface; and in response to receiving the second command, operating the event ingest valve to resume the event streaming to the event processing application.

According to a third aspect of the present disclosure there is provided a non-transitory computer-readable medium comprising program code that is executable by one or more processors for causing the one or more processors to perform operations comprising: operating an ingest valve to pause communications to a stateful application executing on a first node of a distributed computing environment, the ingest valve being separate from the stateful application; accessing state data, of the stateful application, stored in a local memory of the first node; generating a snapshot of the state data of the stateful application; after generating the snapshot, shutting down the stateful application on the first node; providing the snapshot to a second node of the distributed computing environment, wherein the second node starts the stateful application using the state data; and after the stateful application is started on the second node, operating the ingest valve to resume the communications to the stateful application executing on the second node.

The ingest valve may be external to the first node or the second node.

The snapshot may be generated after operating the ingest valve to pause the communications to the stateful application.

The stateful application may be configured to store the state data to the local memory of the first node and not to persistent storage associated with the first node.

The operations may further comprise: prior to operating the ingest valve to pause the communications to the stateful application executing on the first node, receiving a first command from a user; in response to receiving the first command, operating the ingest valve to pause the communications to the stateful application; prior to operating the ingest valve to resume the communications to the stateful application executing on the second node, receiving a second command from the user; and in response to receiving the second command, operating the ingest valve to resume the communications to the stateful application.

The stateful application may be an event processing application, and the ingest valve may be an event ingest valve.

### Brief Description of the Drawings

FIG. 1 shows a block diagram of an example of a distributed computing environment with an event ingest valve according to some aspects of the present disclosure.
FIG. 2 shows a flowchart of an example of a process for moving an event processing application between nodes of a distributed computing environment according to some aspects of the present disclosure.
FIG. 3 shows a block diagram of an example of a system for moving an event processing application between nodes of a distributed computing environment according to some aspects of the present disclosure.
FIG. 4 shows a flowchart of an example of a process for moving an event processing application between nodes of a distributed computing environment according to some aspects of the present disclosure.
FIG. 5 shows a block diagram of an example of a system for moving a stateful application between nodes of a distributed computing environment according to some aspects of the present disclosure.

### Detailed Description

A stateful application may run on a server and store state data to the server's persistent storage. This state data is used by the stateful application to handle requests, event messages, and other communications from clients. There are many reasons why a stateful application may need to be stopped on its current node (e.g., physical server) and redeployed on another node, for example because of a fault or maintenance operation on its current node. But because a stateful application relies on the state data to perform its functionality, and the other node will not have a copy of the state data, this can create numerous problems. For example, when the stateful application is deployed on the other node, its lack of access to the old state data may create inconsistencies in ongoing or new client sessions.

The above problems can be especially pronounced for certain types of stateful applications, such as those that only store their state data in local memory (e.g., RAM) and not in persistent storage, such as a hard drive. For these types of stateful applications, the state data may be erased when the application or server is shutdown, making it even harder to move these applications to different nodes. One example of such a stateful application can be an event processing application, which is designed to process event messages transmitted (e.g., streamed from) client devices. Event processing applications can be difficult to move between nodes because they are typically stateful applications that only store their state data in memory. Nevertheless, such movements may be necessary for failover and other purposes.

In addition, problems can arise during the transition period in which the stateful application is shutdown. If communications from clients continue to be directed to a stateful application that is not running, the communications will not be processed by the stateful application and will fail. The clients may not be notified of these failures or their reason, which may lead to further downstream problems.

Some examples of the present disclosure can overcome one or more of the abovementioned problems by providing an improved way to move a stateful application between nodes of a distributed computing environment. In particular, a first node of the distributed computing environment can execute the stateful application. The first node can receive a request to move the stateful application to a second node of the distributed computing environment. In response, the first node can instruct an ingest valve to pause communications (e.g., client communications) to the stateful application. The ingest valve can be software that is separate from the stateful application. The ingest valve can pause the communications to the stateful application and, in some examples, buffer any communications that arrive during the transition period and/or notify the sender of the ongoing transition. The ingest valve can be transparent to the stateful application, such that the stateful application does not know that incoming communications have been intercepted and paused. Once the communications are paused, the first node can generate a snapshot of the application's state data, which can be stored in the first node's local memory, and store the snapshot in a persistent memory. After generating the snapshot, the stateful application can be shutdown on the first node and the persistent memory can be relocated to the second node, so that the persistent memory is available at the second node.

Next, the second node can access the snapshot in the persistent memory, store a copy of the state data from the snapshot into its local memory, and start the stateful application. With the state data stored in the local memory of the second node, the stateful application can pick up from where it left off on the first node. The ingest valve may then be instructed to resume communications to the stateful application, so that communications can be transmitted to the stateful application executing on the second node. Any buffered communications may also be sent to the stateful application for handling. Through this process, the stateful application can be migrated between the nodes in a way that accounts for the state data and avoids communication problems during the transition period.

In some examples, a similar process can be used to stop and restart a stateful application on a single node. For instance, a node can receive a request to shutdown the stateful application. In response, the node can instruct an ingest valve to pause communications to the stateful application. The ingest valve can pause the communications to the stateful application and, in some examples, buffer any communications that arrive while the stateful application is shutdown and/or notify the sender that the stateful application is unavailable. After the communications are paused, the node can generate a snapshot of the application's state data and store the snapshot in a persistent memory. At a later point in time, for example after receiving a request to restart the stateful application, the node can then access the snapshot in the persistent memory, store a copy of the state data from the snapshot into its local memory, and restart the stateful application. With the state data stored in the local memory, the stateful application can pick up from where it previously left off on the node. The ingest valve may then be instructed to resume communications to the stateful application, so that communications can be transmitted to the stateful application executing once again on the node. Any buffered communications may also be sent to the stateful application for handling. Through this process, the stateful application can be stopped and restarted on a node in a way that accounts for the state data and avoids communication problems during the shutdown period.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

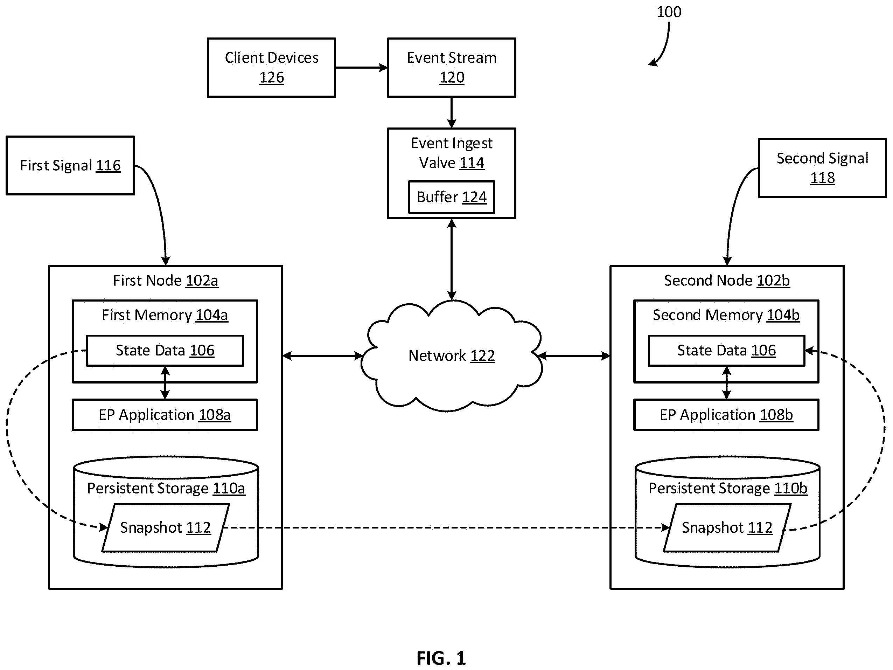

FIG. 1 shows a block diagram of an example of a distributed computing environment 100 with an event ingest valve 114 according to some aspects of the present disclosure. The distributed computing environment 100 can include any number of nodes, including first and second nodes 102a-b. The nodes may be physical or virtual machines. The nodes may be in communication with one another via one or more networks 122, such as a local area network and/or the Internet.

The first node 102a can execute an event processing (EP) application 108a. In some examples, the EP application 108a may be a complex event processing application. The EP application 108a can receive an event stream 120 from one or more client devices 126, analyze the events in the event stream 120, and automatically perform one or more actions based on the events. The client devices 126 can thus serve as event sources and the EP application 108a can serve as an event processing engine in an event processing framework. In some examples, the client devices 126 may include sensors, Internet of Things (IoT) devices, cloud services, user devices, or any combination of these. The client devices 126 may be internal or external to the distributed computing environment 100.

The EP application 108a is a stateful application that may be configured to store its state data 106 in a local memory (e.g., first memory 104a) of the first node 102a. The local memory may be a volatile memory device, such as RAM or cache memory, that does not retain stored information when powered off. The EP application 108a may not store any state data 106 to persistent storage 110a associated with the first node 102a. The state data 106 can include information about previous interactions with the one or more client devices 126. This may allow data from one session with a client device 126 can be carried over to the next session with the client device 126.

In some examples, the first node 102a can receive a first signal 116 for stopping execution of the EP application 108a on the first node 102a. The first signal 116 may be a request or a command, either of which may be issued via a command line interface, a graphical user interface, an application programming interface, etc. In response to receiving the first signal 116, the first node 102a can operate the event ingest valve 114 to pause an event stream 120 to the EP application 108a. For example, the first node 102a can transmit instructions to the event ingest valve 114 to block the event stream 120 to the EP application 108a. The event ingest valve 114 can be conceptually positioned between the incoming event stream 120 and the EP application 108a, so that it can intercept incoming event messages from the one or more client devices 126. When the "valve" is functionally "closed," the event ingest valve 114 can prevent any incoming event messages from being forwarded to the EP application 108a. But because the event ingest valve 114 can be separate from the EP application 108a and even the first node 102a, it may operate transparently to the EP application 108a such that the EP application 108a does not know that the event stream 120 has been paused. While in a "closed" state, the event ingest valve 114 may store any incoming event messages for the EP application 108a in a buffer 124 and/or notify the senders of said event messages that the EP application 108a is currently unavailable. Alerting the senders that the EP application 108a is currently unavailable may prevent them from re-transmitting the event messages repeatedly, which would consume bandwidth and computing resources.

After pausing the event stream 120, the first node 102a can generate a snapshot 112 of the state data 106. In some examples, existing tools such as Checkpoint and Restore In Userspace (CRIU) and/or Coordinated Restore at Checkpoint (CrAC) can be used to create the snapshot 112. These tools may allow for checkpointing and restoring of Linux tasks. The snapshot 112 can then be saved to persistent storage 110a, such as a hard drive or hard disk. In some examples, the persistent storage 110a may be internal to the first node 102a. Alternatively, the persistent storage 110a can be external and communicatively coupled to the first node 102a. After generating the snapshot 112, the first node 102a can shutdown the EP application 108a, so that it is no longer executing.

Next, the snapshot 112 can be provided to the second node 102b. For example, if the persistent storage 110a is internal to the first node 102a, then the first node 102a can transmit a copy of the snapshot 112 to the second node 102b via the one or more networks 122. The second node 102b may then store the snapshot 112 in its own persistent storage 110b. Alternatively, if the persistent storage 110a is external and communicatively coupled to the first node 102a, then the persistent storage 110a can be made available to the second node 102b. For example, the persistent storage 110a can be logically disconnected from the first node 102a and/or logically connected to the second node 102b via network connections. Either way, the snapshot 112 can be provided to the second node 102b.

Eventually, the second node 102b may receive a second signal 118 to deploy the EP application 108b. The second signal 118 may be a request or a command, either of which may be issued via a command line interface, a graphical user interface, an application programming interface, etc. In response to receiving the second signal 118, the second node 102b can extract the state data 106 from the snapshot 112 and store the state data 106 in its local memory - e.g., second memory 104b. Like the first memory 104a, the second memory 104b may be a volatile memory device that does not retain information when powered off. After storing the state data 106 in the second memory 104b, the second node 102b can start EP application 108b, which can be a new instance of the EP application 108a. The EP application 108b can use the state data 106 stored in the second memory 104b to pick up where EP application 108a left off prior to being shut down. After the EP application 108b has been started, the first node 102a or the second node 102b can operate the event ingest valve 114 to resume the event stream 120 to the EP application 108b. For example, the first node 102a or the second node 102b can transmit instructions to the event ingest valve 114 to resume the event stream 120 to the EP application 108b. When the "valve" is functionally "opened," the event ingest valve 114 can allow incoming event messages to be forwarded to the EP application 108b. Additionally, the event ingest valve 114 can forward any buffered event messages to the EP application 108b.

In some examples, the distributed computing environment 100 can orchestrate the migration of the EP application 108 from the first node 102a to the second node 102b. For example, the distributed computing environment 100 can transmit the first signal 116 to the first node 102a and the second signal 118 to the second node 102b at the appropriate times. In some examples, the migration process may be triggered by a third signal from a user. The third signal may be a request or a command, either of which may be issued via a command line interface, a graphical user interface, an application programming interface, etc. In response to receiving the third signal, the distributed computing environment 100 can coordinate with the first and second nodes 102a-b to conduct the migration (e.g., by transmitting the first and second signals 116-118 at the appropriate times).

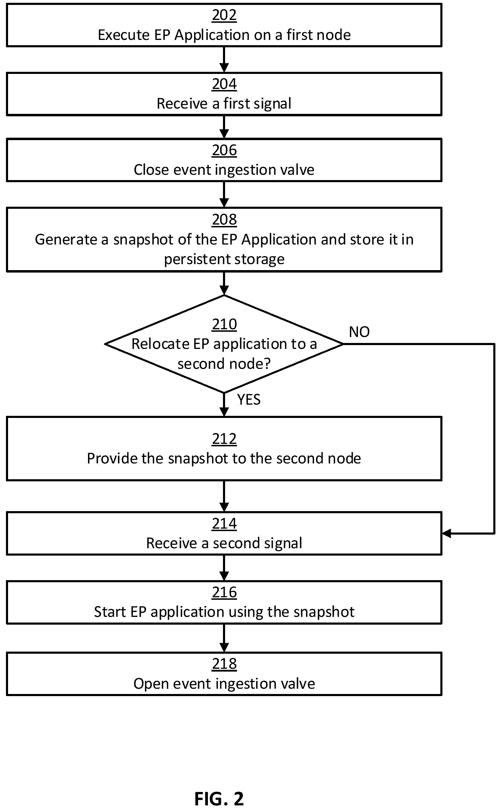

Turning now to FIG. 2, shown is a flowchart of an example of a process for moving an event processing application between nodes of a distributed computing environment according to some aspects of the present disclosure. Other examples may include more operations, fewer operations, different operations, or a different sequence of operations than is shown. The operations of FIG. 2 are described below with reference to the components of FIG. 1 described above.

In block 202, a distributed computing environment 100 executes an EP application 108a. For example, a first node 102a of the distributed computing environment 100 can execute the EP application 108a.

In block 204, the distributed computing environment 100 receives a first signal 116. For example, the first node 102a of the distributed computing environment 100 can receive the first signal 116. The first signal 116 may be transmitted by a user via a command line interface, a graphical user interface, an application programming interface, etc. In some examples, the first signal 116 is a checkpoint signal for generating a snapshot of the current state of the EP application 108a.

In block 206, the distributed computing environment 100 closes an event ingest valve 114. For example, the first node 102a or another component of the distributed computing environment 100 can instruct the event ingest valve 114 to pause all communications to the EP application 108a. When the event ingest valve 114 is in this state, it can be considered "closed" to the EP application 108a.

In block 208, the distributed computing environment 100 generates a snapshot 112 of state data 106 of the EP application 108 and stores the snapshot 112 in persistent storage 110a. For example, the first node 102a can generate the snapshot 112 and store it in persistent storage 110a. To generate the snapshot 112, the state data 106 can be extracted from a first memory 104a of the first node 102a.

In block 210, the distributed computing environment 100 determines whether the EP application 108a is to be relocated to a second node 102b. For example, the first node 102a can determine whether the EP application 108a is to be migrated to the second node 102b based on a user input. If not, the process can skip to block 214. Otherwise, the process can continue to block 212.

In block 212, the distributed computing environment 100 provides the snapshot 112 to the second node 102b. In some examples, this may involve logically disconnecting the persistent storage 110a that contains the snapshot 112 from the first node 102a and/or logically connecting the persistent storage 110a to the second node 102b, so that the second node 102b can access the persistent storage 110a.

In block 214, the distributed computing environment 100 receives a second signal 118. For example, the first node 102a or the second node 102b can receive the second signal 118. The second signal 118 may be transmitted by a user via a command line interface, a graphical user interface, an application programming interface, etc. In some examples, the second signal 118 is a restore signal for restoring the EP application 108 from the snapshot 112.

In block 216, the distributed computing environment 100 starts the EP application 108 using the snapshot 112. This may involve extracting the state data 106 from the snapshot 112 and storing it in local memory for use by the EP application 108. If the EP application 108 is being migrated to the second node 102b, then it may be started on the second node 102b. If the EP application 108 is simply being restarted on the first node 102a, then it may be started again on the first node 102a.

In block 218, the distributed computing environment 100 opens the event ingestion valve 114. For example, the first node 102a, the second node 102b, or another component of the distributed computing environment 100 can instruct the event ingest valve 114 to resume communications to the EP application 108. When the event ingest valve 114 is in this state, the valve can be considered "open" to the EP application 108.

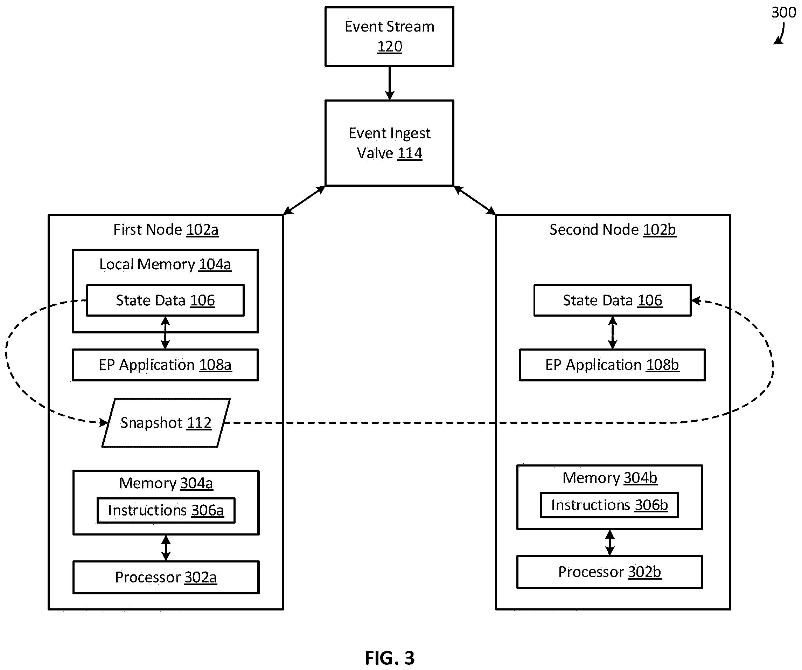

Turning now to FIG. 3, shown is a block diagram of an example of a system for moving an event processing application between nodes of a distributed computing environment 300 according to some aspects of the present disclosure. The system includes one or more processors 302a-b communicatively coupled to one or more memories 304a-b, which may include local memory 104a or may be separate from local memory 104a. Each of the processors 302a-b is hardware that can include one processing device or multiple processing devices. The one or more processors 302a-b can be located in a single node or spread across multiple nodes of the distributed computing environment 300.

The one or more processors 302a-b can execute instructions 306a-b stored in the one or more memories 304a-b to perform one or more operations. In some examples, the instructions 306a-b can include processor-specific instructions generated by a compiler or an interpreter from code written in any suitable computer-programming language, such as C, C++, C#, or Java.

Each of the memories 304a-b is hardware that can include one memory device or multiple memory devices. The memories 304a-b can be volatile or non-volatile (it can retain stored information when powered off). Examples of the memories 304a-b can include electrically erasable and programmable read-only memory (EEPROM) or flash memory. At least a portion of the memories 304a-b can include a non-transitory computer-readable medium. A computer-readable medium can include electronic, optical, magnetic, or other storage devices capable of providing the one or more processors 302a-b with the instructions 306a-b or other program code. Examples of a computer-readable medium include magnetic disks, memory chips, ROM, RAM, an ASIC, a configured processor, optical storage, or any other medium from which a computer processor can read the instructions 306a-b.

The one or more processors 302a-b can execute the instructions 306a-b to perform operations. For example, the processors 302a-b can operate an event ingest valve 114 to pause event streaming 120 to an event processing application 108a executing on a first node 102a of a distributed computing environment 300. Operating the event ingest valve 114 may involve transmitting commands (e.g., over one or more networks) to the event ingest valve 114. The event ingest valve 114 can be separate from the event processing application 108a. Next, the processors 302a-b can access state data 106, of the event processing application 108a, stored in a local memory 104a of the first node 102a. The local memory 104a can be internal to the first node 102a. The processors 302a-b can generate a snapshot of the state data 106 of the event processing application 108a and, after generating the snapshot 112, shut down the event processing application 108a on the first node 102a. The processors 302a-b can then provide the snapshot 112 to a second node 102b of the distributed computing environment 300, where the second node 102b is configured to start the event processing application 108b (e.g., a new instance of the event processing application 108b) using the state data 106. After the event processing application 108b is started on the second node 102b, the processors 302a-b can operate the event ingest valve 114 to resume the event streaming 120 to the event processing application 108b executing on the second node 102b.

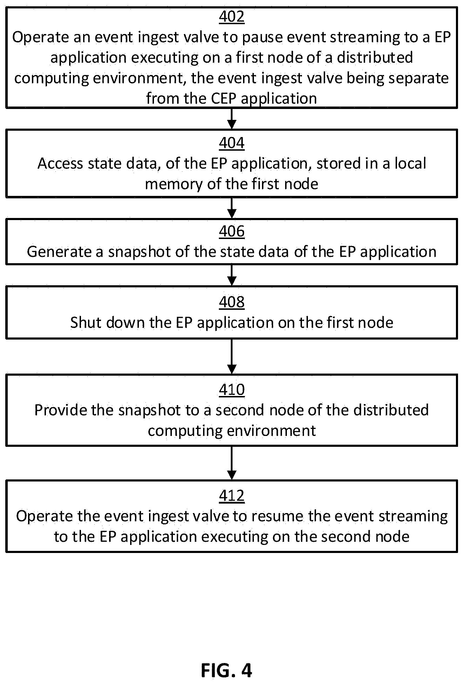

Turning now to FIG. 4, shown is a flowchart of an example of a process for moving an event processing application between nodes of a distributed computing environment according to some aspects of the present disclosure. Other examples may include more operations, fewer operations, different operations, or a different sequence of operations than is shown. The operations of FIG. 4 are described below with reference to the components of FIGS. 1 and 3 described above.

In block 402, the one or more processors 302a-b operate an event ingest valve 114 to pause event streaming 120 to an event processing application 108a executing on a first node 102a of a distributed computing environment 300. Operating the event ingest valve 114 may involve transmitting commands to the event ingest valve 114. The event ingest valve 114 can be separate from or part of the event processing application 108a.

In block 404, the one or more processors 302a-b access state data 106, of the event processing application 108a, stored in a local memory 104a of the first node 102a.

In block 406, the one or more processors 302a-b generate a snapshot of the state data 106 of the event processing application 108a.

In block 408, the one or more processors 302a-b shutdown the event processing application 108a on the first node 102a.

In block 410, the one or more processors 302a-b provide the snapshot 112 to a second node 102b of the distributed computing environment 300. This may involve logically attaching a persistent storage device that includes the snapshot 112 to the second node 102b. Alternatively, this may involve transmitting a copy of the snapshot 112 from the first node 102a to the second node 102b over a network 122. The second node 102b is configured to start the event processing application 108b (e.g., a new instance of the event processing application 108b) using the state data 106.

In block 412, after the event processing application 108b is started on the second node 102b, the one or more processors 302a-b operate the event ingest valve 114 to resume the event streaming 120 to the event processing application 108b executing on the second node 102b. Operating the event ingest valve 114 may involve transmitting commands to the event ingest valve 114. The second node 102b may then receive new event streams from one or more client devices and process them using the event processing application 108b.

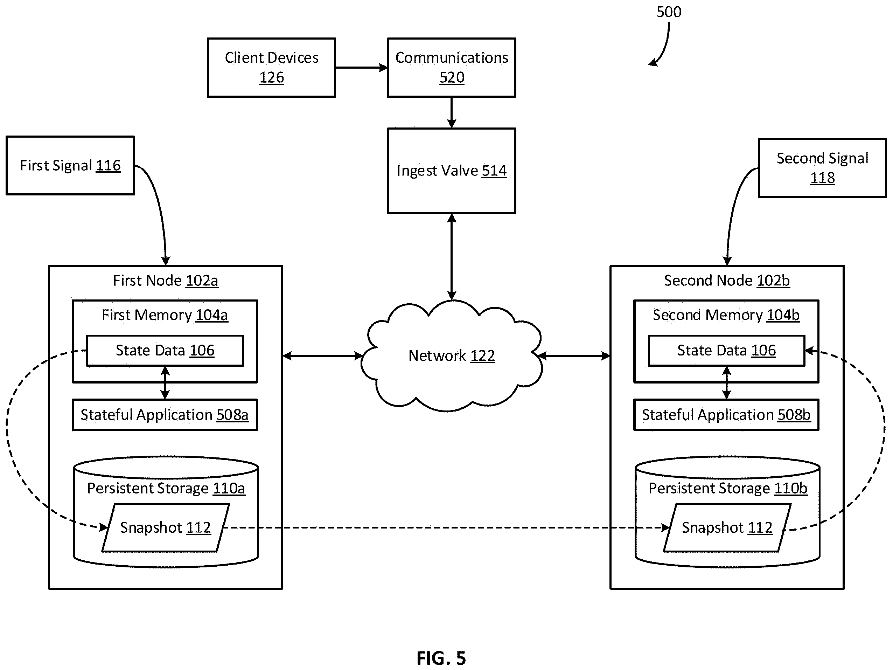

It will be appreciated that although some of the above examples are described with reference to an event processing application, similar principles may be applied to other types of stateful applications. An example of this is shown in FIG. 5, which depicts a system 500 that can implement processes similar to those described above, except using a stateful application 508 and an ingest valve 514. The stateful application 508 may be an event processing application or another type of stateful application. The ingest valve 514 may be an event ingest valve (that can intercept event messages) or another type of ingest valve (that can intercept other types of communications 520 from client devices 126).

In some examples, the stateful application 508 can execute in a virtual machine and store its state data 106 in a virtual memory of the virtual machine. In those examples, to generate the snapshot 112, the state data 106 may be copied from the virtual memory of the virtual machine to persistent storage 110a of the first node 102a.

The above description of certain examples, including illustrated examples, has been presented only for the purpose of illustration and description and is not intended to be exhaustive or to limit the disclosure to the precise forms disclosed. Modifications, adaptations, and uses thereof will be apparent to those skilled in the art without departing from the scope of the disclosure. For instance, any examples described herein can be combined with any other examples.

## Claims

1. A computer-implemented method comprising:
operating an event ingest valve to pause event streaming to an event processing application executing on a first node of a distributed computing environment, the event ingest valve being separate from the event processing application;
accessing state data, of the event processing application, stored in a local memory of the first node;
generating a snapshot of the state data of the event processing application;
after generating the snapshot, shutting down the event processing application on the first node;
providing the snapshot to a second node of the distributed computing environment, wherein the second node starts the event processing application using the state data; and
after the event processing application is started on the second node, operating the event ingest valve to resume the event streaming to the event processing application executing on the second node.

2. The method of claim 1, wherein the event ingest valve is software that is external to the first node.

3. The method of claim 1, wherein the snapshot is generated after operating the event ingest valve to pause the event streaming to the event processing application.

4. The method of claim 1, wherein the event processing application is executing in a virtual machine, and wherein generating the snapshot of the state data involves copying the state data from a virtual memory of the virtual machine to persistent storage of the first node.

5. The method of claim 1, further comprising:
storing the snapshot to persistent storage logically connected to the first node; and
prior to the event processing application being started on the second node, logically connecting the persistent storage with the snapshot to the second node.

6. The method of claim 1, wherein the event processing application is a stateful application that is configured to store the state data to the local memory and not persistent storage.

7. The method of claim 1, wherein the state data corresponds to a state of the event processing application at a point in time at which the snapshot is generated.

8. The method of claim 1, further comprising:
prior to operating the event ingest valve to pause the event streaming to the event processing application executing on the first node, receiving a first command issued by a user via a graphical user interface;
in response to receiving the first command, operating the event ingest valve to pause the event streaming to the event processing application;
prior to operating the event ingest valve to resume the event streaming to the event processing application executing on the second node, receiving a second command issued by the user via the graphical user interface; and
in response to receiving the second command, operating the event ingest valve to resume the event streaming to the event processing application.

9. A system comprising:
one or more processors; and
one or more memories including instructions that are executable by the one or more processors for causing the one or more processors to perform the method of any of claims 1-8.

10. A non-transitory computer-readable medium comprising program code that is executable by one or more processors for causing the one or more processors to perform operations comprising:
operating an ingest valve to pause communications to a stateful application executing on a first node of a distributed computing environment, the ingest valve being separate from the stateful application;
accessing state data, of the stateful application, stored in a local memory of the first node;
generating a snapshot of the state data of the stateful application;
after generating the snapshot, shutting down the stateful application on the first node;
providing the snapshot to a second node of the distributed computing environment, wherein the second node starts the stateful application using the state data; and
after the stateful application is started on the second node, operating the ingest valve to resume the communications to the stateful application executing on the second node.

11. The non-transitory computer-readable medium of claim 10, wherein the ingest valve is external to the first node or the second node.

12. The non-transitory computer-readable medium of claim 10, wherein the snapshot is generated after operating the ingest valve to pause the communications to the stateful application.

13. The non-transitory computer-readable medium of claim 10, wherein the stateful application is configured to store the state data to the local memory of the first node and not to persistent storage associated with the first node.

14. The non-transitory computer-readable medium of claim 10, wherein the operations further comprise:
prior to operating the ingest valve to pause the communications to the stateful application executing on the first node, receiving a first command from a user;
in response to receiving the first command, operating the ingest valve to pause the communications to the stateful application;
prior to operating the ingest valve to resume the communications to the stateful application executing on the second node, receiving a second command from the user; and
in response to receiving the second command, operating the ingest valve to resume the communications to the stateful application.

15. The non-transitory computer-readable medium of claim 10, wherein the stateful application is an event processing application, and wherein the ingest valve is an event ingest valve.
